(19) **Europäisches Patentamt**
**European Patent Office**
**Office européen des brevets**

(11) **EP 4 678 413 A1**

(12) # EUROPEAN PATENT APPLICATION

(43) Date of publication:
**14.01.2026 Bulletin 2026/03**

(21) Application number: **25185444.4**

(22) Date of filing: **26.06.2025**

(51) International Patent Classification (IPC):
*B60C 1/00* (2006.01)    *B60C 9/07* (2006.01)
*B60C 9/17* (2006.01)    *B60C 9/28* (2006.01)
*B60C 9/00* (2006.01)    *B60C 13/00* (2006.01)
*B60C 9/20* (2006.01)    *B60C 9/09* (2006.01)
*B60C 11/00* (2006.01)

(52) Cooperative Patent Classification (CPC):
**B60C 9/28; B60C 1/0008; B60C 9/07; B60C 9/09;**
**B60C 9/17;** B60C 2009/0071; B60C 2011/0033;
B60C 2013/007

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.07.2024 JP 2024111073**

(71) Applicant: **Sumitomo Rubber Industries, Ltd.**
**Kobe-shi, Hyogo 651-0072 (JP)**

(72) Inventors:
• **ONISHI, Hayato**
  **Kobe-shi, 651-0072 (JP)**
• **IMAI, Daiki**
  **Kobe-shi, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **PNEUMATIC TIRE**

(57)    Provided is a pneumatic tire comprising a carcass, an inner liner, and at least one reinforcing layer, wherein $A_1$, $A_2$, Ta, Tb, 70°CE*i, and K satisfy the following inequalities,

$$(1) \ |A_2 - A_1| > 0$$

$$(2) \ Tb / Ta > 0.50$$

$$(3) \ 70°CE^*i > K / \{|A_2 - A_1| \times (Tb - 0.5 \times Ta)\}$$

(provided that K is 6.5)
where $A_1$ represents an angle of carcass cord inclined from a tire circumferential direction on a tire center line, $A_2$ represents an angle of carcass cord inclined from the tire circumferential direction at a tire maximum width position, Ta represents a distance from a tire inner surface to a carcass cord on the tire center line, Tb represents the distance on a tire width direction end of the inner-most reinforcing layer ply, 70°CE*i represents a complex elastic modulus of the inner liner, and K represent a constant.

# FIG. 2

**Description**

TECHNICAL FIELD

The present invention relates to a pneumatic tire.

BACKGROUND OF THE INVENTION

A carcass ply forms a skeleton in a pneumatic tire. For a carcass cord constituting the carcass ply, types of tires such as a radial tire, a bias tire, and the like are distinguished by its extending direction, and performances such as durability, rigidity, and the like of the pneumatic tire are determined by the carcass cord. JP 2023-84469 A and WO 2021/123530 describe a pneumatic tire with carcass cords flexed by controlling the direction in which the carcass cords extend.

SUMMARY OF THE INVENTION

Such a pneumatic tire can be imparted with desired performances by controlling and changing an extending direction of carcass cords extend. However, there is a concern about deterioration in durability of the pneumatic tire due to strain concentration on a part sandwiched between the tread part and the side part during running.

It is an object of the present invention to provide a pneumatic tire comprising carcass cords whose extending direction changes for suppressing deterioration in durability.

That is, the present invention relates to the following tire:
a pneumatic tire comprising:

a carcass,
an inner liner arranged on the inner side of the carcass in a tire radial direction, and
at least one reinforcing layer arranged on the outer side of the carcass in the tire radial direction,
wherein the carcass is composed of at least one carcass ply that comprises a plurality of carcass cords and a topping rubber covering the carcass cords,
wherein the reinforcing layer is composed of at least one reinforcing layer ply that comprises a plurality of reinforcing layer cords and a topping rubber covering the reinforcing layer cords,
wherein, among the at least one reinforcing layer ply, a reinforcing layer ply arranged on the innermost side in the tire radial direction is defined as an inner-side reinforcing layer ply, and
wherein $A_1$, $A_2$, Ta, Tb, 70°CE*i, and K satisfy the following inequalities,

$$(1)\ |A_2 - A_1| > 0$$

$$(2)\ Tb\ /\ Ta > 0.50$$

$$(3)\ 70°CE^*i > K\ /\ \{|A_2 - A_1| \times (Tb - 0.5 \times Ta)\}$$

((provided that K is 6.5)
where $A_1$ represents an angle, in degrees, at which an extending direction of carcass cord of a carcass ply on the outermost side in the tire radial direction among the carcass plies inclines from a tire circumferential direction at a position on a tire center line, $A_2$ represents an angle, in degrees, at which an extending direction of carcass cord of the carcass ply on the outermost side in the tire radial direction among the carcass ply inclines from the tire circumferential direction at a tire maximum width position, Ta represents a distance, in mm, from a tire inner surface to a surface of a carcass cord on the tire center line, Tb represents a distance, in mm, from a tire inner surface to a surface of a carcass cord on a normal line of the tire inner surface which passes through a tire width direction end of the inner-side reinforcing layer ply, 70°CE*i represents a complex elastic modulus at 70°C, in MPa, of a rubber composition constituting the inner liner, and K represent a constant.

According to the present invention, deterioration in durability of a pneumatic tire comprising carcass cords whose extending direction changes can be suppressed.

BRIEF DESCRIPTION OF THE DRAWINGS

FIG. 1 is a cross-sectional view of a pneumatic tire relating to one embodiment of the present invention, taken along a plane passing through a tire rotation axis.

FIG. 2 is one example of a developed view of carcass cords constituting a carcass ply of a pneumatic tire relating to one embodiment of the present invention, which shows an angle formed between an extending direction of the carcass cords and a tire circumferential direction.

FIG. 3 is a variation of a developed view of carcass cords constituting a carcass ply of a pneumatic tire relating to one embodiment of the present invention, which shows an angle formed between an extending direction of the carcass cords and a tire circumferential direction.

FIG. 4 is a schematic view representing a preferred range of the angle formed between an extending direction of a carcass cord constituting a carcass ply of a pneumatic tire relating to one embodiment of the present invention and a tire circumferential direction.

DETAILED DESCRIPTION

A pneumatic tire that is one embodiment of the present invention will be described below. The pneumatic tire of the present embodiment is a pneumatic tire comprising a carcass, an inner liner arranged on the inner side of the carcass in a tire radial direction, and at least one reinforcing layer arranged on the outer side of the carcass in the tire radial direction, wherein the carcass is composed of at least one carcass ply that comprises a plurality of carcass cords and a topping rubber covering the carcass cords, wherein the reinforcing layer is composed of at least one reinforcing layer ply that comprises a plurality of reinforcing layer cords and a topping rubber covering the reinforcing layer cords, wherein, among the at least one reinforcing layer ply, a reinforcing layer ply arranged on the innermost side in the tire radial direction is defined as an inner-side reinforcing layer ply, and wherein $A_1$, $A_2$, Ta, Tb, $70°CE^*i$, and K satisfy the following inequalities,

$$(1)\ |A_2 - A_1| > 0$$

$$(2)\ Tb\ /\ Ta > 0.50$$

$$(3)\ 70°CE^*i > K\ /\ \{|A_2 - A_1| \times (Tb - 0.5 \times Ta)\}$$

((provided that K is 6.5)

where $A_1$ represents an angle, in degrees, at which an extending direction of carcass cord of a carcass ply on the outermost side in the tire radial direction among the carcass plies inclines from a tire circumferential direction at a position on a tire center line, $A_2$ represents an angle, in degrees, at which an extending direction of carcass cord of the carcass ply on the outermost side in the tire radial direction among the carcass ply inclines from the tire circumferential direction at a tire maximum width position, Ta represents a distance, in mm, from a tire inner surface to a surface of a carcass cord on the tire center line, Tb represents a distance, in mm, from a tire inner surface to a surface of a carcass cord on a normal line of the tire inner surface which passes through a tire width direction end of the inner-side reinforcing layer ply, $70°CE^*i$ represents a complex elastic modulus at 70°C, in MPa, of a rubber composition constituting the inner liner, and K represent a constant.

Although it is not intended to be bound by a theory, in the present invention, the following can be considered as a mechanism by which deterioration of durability is suppressed. That is, in the present invention, in accordance with the configuration in which the angle at which the extending direction of carcass cord inclines from the tire circumferential direction changes depending on the positions, i.e., the tire center line position and the tire maximum width position, a thickness of a tire inner surface member on the normal line of the tire inner surface which passes through the tire width direction end of the inner-side reinforcing layer ply is secured. Additionally, a complex elastic modulus of an inner liner rubber constituting the tire inner surface member is adjusted depending on: a difference in angle at which the extending direction of carcass cord inclines from the tire circumferential direction; and a thickness of the tire inner surface member so that predetermined relational inequalities are satisfied, whereby it is considered that deterioration in durability of the tire is suppressed.

K is preferably 7.4, more preferably 10.0.

This is because the inequality (3) is satisfied under a stricter condition.

The right side in the inequality (2) is preferably 1.00.

This is because the inequality (2) is satisfied under a stricter condition.

It is preferable that the rubber composition constituting the inner liner comprises a rubber component and that the rubber component comprises an isoprene-based rubber.

This is because, when the rubber composition comprises an isoprene-based rubber having a high strength, it is considered that durability of the tire is improved.

The rubber composition constituting the inner liner preferably comprises resin.

This is because it is considered that concentration of strain can be suppressed by increasing flexibility with resin and process passability during molding of a tire can be enhanced by increasing adhesiveness between rubbers.

When an angle, in degrees, at which an extending direction of reinforcing layer cord inclines from the tire circumferential direction in at least any reinforcing layer ply of the reinforcing layer plies is referred to as $A_{RF}$, $A_1$ described above is preferably different from $A_{RF}$.

This is because, when $A_1$ and $A_{RF}$ are different from each other, the twist of the carcass ply arranged with control of its extending direction, on the inner side in the radial direction of the tread part can be mitigated.

The inclination direction of $A_{RF}$ from the tire circumferential direction is preferably opposite to the inclination direction of $A_1$ from the tire circumferential direction.

This is because, when the inclination direction at $A_1$ and the inclination direction at $A_{RF}$ are opposite to each other, twist of the carcass ply that is arranged on the inner side in the radial direction of the tread part while controlling its extending direction can be canceled.

The reinforcing layer comprising the reinforcing layer ply in which the angle, in degrees, at which the extending direction of reinforcing layer cord inclines from the tire circumferential direction is $A_{RF}$ is preferably composed of one reinforcing layer ply.

This is because, when the number of reinforcing layer plies is decreased, the weight of the tire can be reduced.

The reinforcing layer ply in which the angle, in degrees, at which the extending direction of reinforcing layer cord inclines from the tire circumferential direction is $A_{RF}$ is preferably a belt ply.

This is because, when the reinforcing layer ply is a belt ply, the number of the reinforcing layer plies can be minimized as required.

The at least one reinforcing layer preferably consists of a belt.

This is because, when the number of types of reinforcing layers is decreased, the weight of the tire can be reduced.

The carcass is preferably composed of one carcass ply.

This is because, when the number of carcass plies is decreased, the weight of the tire can be reduced.

$A_2$ is preferably +70° or higher and +90° or lower or is preferably -70° or lower and higher than -90°.

When a range of $A_2$ is as described above, the effects of the present invention can be improved.

<Definition>

A "standardized state" is a state in which the tire is rim-assembled to a standardized rim, filled with air at a standardized internal pressure, and applied with no load. Unless otherwise noted, a tire in a standardized state is used.

A "dimension of each part of a tire" is a value specified in a standardized state for one appearing on the outer surface of the tire, unless otherwise specified, while it is a value specified, for example, in a condition where the tire is cut on a plane including a tire rotation axis and the cut tire piece is held with a rim width of a standardized rim, for one present inside the tire or on a tire cutting surface.

A "standardized rim" is a rim, in a standard system including a standard on which the tire is based, defined for each tire by the standard. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of a tire that is not defined by the standard, the "standardized rim" shall refer to a rim having the narrowest rim width among rims that can be rim-assembled to the tire, that can maintain an internal pressure (that is, do not cause air leakage between the rim and the tire), and that have the smallest rim diameter.

A "standardized internal pressure" is an air pressure, in a standard system including a standard on which the tire is based, defined for each tire by the standard, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in the case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load, in kg" is a load, in a standard system including a standard on which the tire is based, defined for each tire by the standard, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in the case of tires that are not defined by the standard, a maximum load capacity $W_L$ obtained by a calculation is defined as a standardized load.

A "maximum load capacity $W_L$, in kg" is calculated by the following equation. "V" represents a virtual volume, in $mm^3$, of a tire, "Dt" represents a tire outer diameter, in mm, in a standardized state, "Ht" represents a cross-sectional height, in mm, of the tire in a tire radial direction on a cross section of the tire taken along a plane including a tire rotation axis, and "Wt" represents a cross-sectional width, in mm, of the tire in the standardized state. When R represents a rim diameter of the tire, Ht can be calculated by the following equation: (Dt-R)/2. Wt is a value obtained by excluding, if any, patterns, letters, or the like on the side surface of the tire. Besides, the maximum load capacity has the same meaning as a standardized load described above.

$$W_L = 0.000011 \times V + 175$$

$$V = \{(Dt/2)^2 - (Dt/2 - Ht)^2\} \times \pi \times Wt$$

A "tread part" is a member including a part forming a ground-contacting surface of a tire and is a member arranged on an outer side in a tire radial direction with respect to members such as a reinforcing layer, a carcass, and the like, on a cross section of the tire taken along a plane including a tire rotation axis, in a case where the tread part comprises such members.

A "tread ground-contacting end" refers to an outermost end in a tire width direction with which a tire touches the ground when the tire is pressed against the ground. The tread ground-contacting end can be determined by assembling the tire to a standardized rim, filling the tire with air at a standardized internal pressure, and leaving the tire to stand at 25°C for 24 hours, followed by applying ink to a tire tread surface, applying a standardized load (load equal to the maximum load capacity) on the tire to perpendicularly press the tire tread surface on cardboard (a camber angle is 0°), and performing transcription of the ink.

A "tread ground-contacting width" refers to a distance from one of tread ground-contacting ends to the other of the tread ground-contacting ends along a tread surface.

A "carcass" means a member forming a tire skeleton and is composed of at least one carcass ply that comprises a plurality of carcass cords and a topping rubber covering the carcass cords. An inner member is present on the inner side of the carcass in the tire radial direction. Examples of the inner member include an inner liner, an insulation, and the like.

An "inner liner" means a member forming a tire inner cavity surface. By the inner liner, an amount of air permeation is reduced, and a tire internal pressure can be sustained.

A "tire maximum width position" refers to a position at which a tire has the maximum width on a cross section in a tire width direction, the maximum width being measured in a standardized state. The tire maximum width position is denoted by P in each drawing.

An "R1 region" refers to a region in which an inclination angle of a carcass cord that is $A_1$ on a tire center line is within a predetermined fluctuation range. A fluctuation range of an inclination angle of a carcass cord allowed in the R1 region means a range of -10% or more and 5% or less for an absolute value of $A_1$ ($|A_1|$). The R1 region straddles the tire center line and does not include a tire maximum width position that is a position at which $A_2$ is measured.

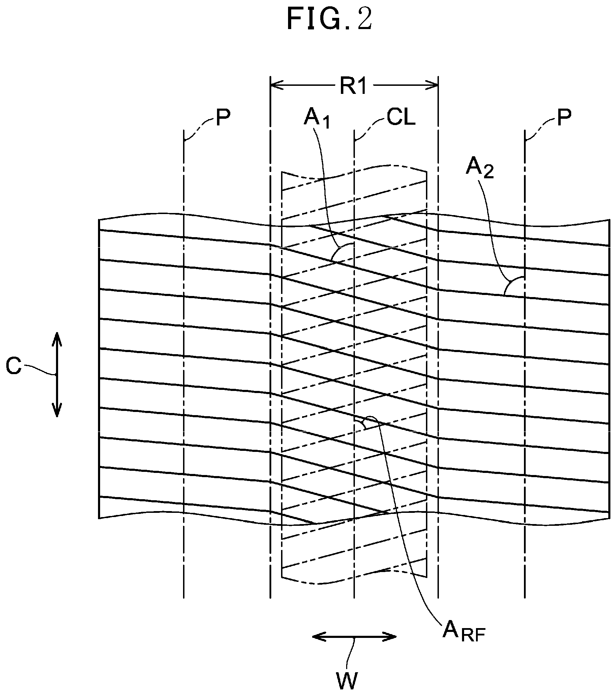

"$A_1$" means an angle, in degrees, at which an extending direction of carcass cord inclines from a tire circumferential direction at a position on a tire center line and is expressed in a range of higher than -90° and +90° or lower, where the angle is regarded as plus (+) when the extending direction of carcass cord inclines downward to the right with respect to the tire circumferential direction and the angle is regarded as minus (-) when the extending direction of carcass cord inclines upward to the right with respect to the tire circumferential direction, when the tire is viewed from the inner-surface side. In a case where there are a plurality of carcass plies, a carcass ply on the outermost side in the tire radial direction is measured. FIG. 2 shows a case where $A_1$ is plus (+). Besides, in a case where its value is a plus value, the symbol "+" may be omitted.

"$A_2$" means an angle, in degrees, at which an extending direction of carcass cord inclines from a tire circumferential direction at a tire maximum width position and is expressed in a range of higher than -90° and +90° or lower, where the angle is regarded as plus (+) when the extending direction of carcass cord inclines downward to the right with respect to the tire circumferential direction and the angle is regarded as minus (-) when the extending direction of carcass cord inclines upward to the right with respect to the tire circumferential direction, when the tire is viewed from the inner-surface side. FIG. 2 shows a case where $A_2$ is plus (+). Besides, in a case where its value is a plus value, the symbol "+" may be omitted. In a case where there are a plurality of corresponding carcass plies, A2 is preferably measured for a carcass ply on the outermost side in the tire radial direction.

A carcass ply for which $A_2$ is to be measured is present so that the carcass ply extends from a tire center line toward both sides in a tire width direction, and the carcass ply shall extend so that at least one side thereof is beyond a tire maximum width position. At this time, the other side of the carcass ply may or may not be beyond the tire maximum width position. In a case where a main body part and a turn-up part of the carcass ply are present at a tire maximum width position, $A_2$ is measured for a carcass cord of the main body part. Moreover, there is a case where no turn-up part of the carcass ply is present at the tire maximum width positions or where one of the turn-up parts of the carcass ply is present only on one side in the tire width direction. Also in these cases, A2 is measured for a carcass cord of the main body part.

For the main body part and the turn-up parts of the carcass ply, for example, the following cases are assumed:

a: a case where the turn-up parts are present on both sides of the main body part in the tire width direction;
b: a case where the main body part of the carcass ply extends to the tire maximum width positions on both sides in the tire width direction and only one turn-up part is present on one side of the main body part in the tire width direction (no turn-up part is present on the other side of the main body part in the tire width direction);
c: a case where the main body part of the carcass ply extends only to the tire maximum width position on one side in the tire width direction and only one turn-up part is present on the one side of the main body part in the tire width direction (the main body part does not extend to the tire maximum width position on the other side in the tire width direction and no turn-up part is present on the other side in the tire width direction);
d: a case where the main body part of the carcass ply extends to the tire maximum width positions on both sides in the tire width direction and no turn-up parts are present on any of both sides of the main body part in the tire width direction; and
e: a case where the main body part of the carcass ply extends only to the tire maximum width position on one side in the tire width direction and no turn-up parts are present on any of both sides of the main body part in the tire width direction.

In each of the above-described cases a to e, $A_2$ is measured as follows. That is, in the cases a, b, and d, $A_2$ is measured at two positions of the main body part. At least one of these values of $A_2$ has only to satisfy a predetermined requirement. On the other hand, in the cases c and e, $A_2$ is measured at one position of the main body part. The $A_2$ needs to satisfy a predetermined requirement.

A "carcass cord changing in its extending direction" mean a carcass cord satisfying the above-described inequality (1), that is, $|A_2 - A_1| > 0$.

A "reinforcing layer" means a member that is provided on the outer side in a tire radial direction with respect to a carcass and on the inner side in the tire radial direction with respect to a tread and that is responsible for a hooping effect of suppressing the tire from bulging out due to internal pressure or rotation, as well as for receiving and mitigating input from a road surface. The reinforcing layer is composed of at least one reinforcing layer ply that comprises a plurality of reinforcing layer cords and a topping rubber covering the reinforcing layer cords. Among the at least one reinforcing layer ply, a reinforcing layer ply arranged on the innermost side in the tire radial direction is referred to as an inner-side reinforcing layer ply. Specific examples of the reinforcing layer include a belt, a band, and the like.

A "belt" is one of reinforcing layers and is composed of at least one belt ply. A plurality of belt cords constituting a belt ply are arranged substantially parallel to each other, and an extending direction of belt cord inclines at 10° or higher relative to a tire circumferential direction. The belt comprises a joint part on the circumference of the tire. Here, the wording "substantially parallel" means that a difference in angle of an extending direction of each belt cord with respect to a tire circumferential direction is within a range of ±3°.

A "band" is one of reinforcing layers and is composed of at least one band ply. A band cord constituting a band ply is arranged in a state where the band cord is helically wound in a tire circumferential direction, and an angle at which an extending direction of band cord inclines relative to a tire circumferential direction remains within a range of ±5°. The band does not comprise any joint part on the circumference of the tire. Among bands, there are a full band covering the entire tread and an edge band covering only an edge part of the tread.

"$A_{RF}$" means an angle, in degrees, at which an extending direction of reinforcing layer cord of a reinforcing layer ply inclines from a tire circumferential direction and is expressed in a range of higher than -90° and +90° or lower, where the angle is regarded as plus (+) when the extending direction of carcass cord inclines downward to the right with respect to the tire circumferential direction and the angle is regarded as minus (-) when the extending direction of carcass cord inclines upward to the right with respect to the tire circumferential direction, when the tire is viewed from the inner-surface side. FIG. 2 shows a case where $A_{RF}$ is minus (-). Besides, in a case where its value is a plus value, the symbol "+" may be omitted.

"Ta" is a distance, in mm, from a tire inner surface to a surface of a carcass cord on a tire center line, and "Tb" is a distance, in mm, from a tire inner surface to a surface of a carcass cord on a normal line of the tire inner surface which passes through an end of an inner-side reinforcing layer ply in a tire width direction.

<Measuring method>

"70°CE*i" is a complex elastic modulus at 70°C of a rubber composition constituting an inner liner and is measured using a dynamic viscoelasticity measuring device (for example, EPLEXOR series manufactured by gabo Systemtechnik GmbH), under a condition of a temperature at 70°C, a frequency of 10 Hz, an initial strain of 5%, a dynamic strain of $\pm 1\%$, and an extension mode. A sample used for measurement is a vulcanized rubber composition having a length of 20 mm, a width of 4 mm, and a thickness of 1 mm. When a sample is prepared by being cut out from a tire, the sample is prepared in a state where dimensions of the sample are made to approximate the above-described predetermined dimensions as much as possible under the condition that a length direction of the sample is configured to coincide with a tire circumferential direction and a thickness direction of the sample is configured to coincide with a tire radial direction.

Each of "$A_1$ and $A_2$" is determined as an average of angles measured for four different cords. Selection of the four cords is performed preferably by selecting arbitrary four cords, more preferably by selecting four cords spaced at equal intervals of approximately 90° in a tire circumferential direction. In this case, although there is no need to use the same cord for measurement of $A_1$ and $A_2$, it is further preferable that a cord used for measurement of $A_1$ is the same as a cord used for measurement of $A_2$.

"$A_{RF}$" is determined as an average of angles measured for four different cords. Selection of the four cords is performed preferably by selecting arbitrary four cords, more preferably by selecting four cords spaced at equal intervals of approximately 90° in a tire circumferential direction.

A "glass transition temperature of a rubber component" means a static glass transition temperature of each rubber component calculated by a differential scanning calorimeter (for example, Q200 manufactured by TA Instruments Japan Inc.).

A "styrene content" is calculated by pyrolysis gas chromatography or NMR measurement ($^1$H-NMR or $^{13}$C-NMR). For a component amount such as a "styrene content", there is a true value that does not depend on any measuring methods, unlike physical property values such as a complex elastic modulus (E*) and the like. Therefore, it is preferable to use a measuring method that is as highly accurate as possible. Besides, in the present specification, "pyrolysis gas chromatography" refers to a method of heating a sample by a pyrolysis device, separating individual components contained in a gas-phase component generated by this heating from one another using a separation column, and analyzing each isolated component.

A "vinyl content (1,2-bond butadiene unit amount)" is calculated by pyrolysis gas chromatography or NMR measurement ($^1$H-NMR or $^{13}$C-NMR). Also for a "vinyl content", there is a true value that does not depend on any measuring methods, like a "styrene content". Therefore, it is preferable to use a measuring method that is as highly accurate as possible.

A "cis content (cis-1,4-bond butadiene unit amount)" is a value measured by infrared absorption spectrometry in accordance with JIS K 6239-2:2017 or NMR measurement ($^1$H-NMR or $^{13}$C-NMR) and is applied to a rubber component having a repeating unit derived from butadiene such as, for example, a BR and the like. Also for a "cis content", there is a true value that does not depend on any measuring methods, like a "styrene content". Therefore, it is preferable to use a measuring method that is as highly accurate as possible.

A "weight-average molecular weight (Mw)" can be calculated in terms of a standard polystyrene based on measurement values obtained by a gel permeation chromatography (GPC) (for example, GPC-8000 Series manufactured by Tosoh Corporation, detector: differential refractometer, column: TSKgel (Registered Trademark) SuperMultiporeHZ-M manufactured by Tosoh Corporation). For example, it is applied to an SBR, a BR, a plasticizing agent, and the like.

A "nitrogen adsorption specific surface area ($N_2$SA) of carbon black" is measured according to JIS K 6217-2:2017.

A "nitrogen adsorption specific surface area ($N_2$SA) of silica" is measured by a BET method according to ASTM D3037-93.

An "average primary particle size" is values calculated by an arithmetic mean of particle sizes of 400 particles which are photographed with a transmission or scanning electron microscope. In a case that the particle is in a spherical shape, a diameter of the sphere is defined as a particle size, and in cases of shapes other than the spherical shape, an equivalent circle diameter (positive square root of "$4\times$(area of particle)$/\pi$") calculated from a microscope image is defined as a particle size.

A "plasticizing agent" is a material giving a rubber component plasticity and is a component extracted from a rubber composition using acetone. Moreover, examples of the plasticizing agent include a plasticizing agent that is liquid (in a liquid state) at 25°C and a plasticizing agent that is solid at 25°C. However, the plasticizing agent shall not include wax and stearic acid commonly used in the tire industry.

A "content of a plasticizing agent" also includes an amount of a plasticizing agent that is contained in a rubber component extended by the plasticizing agent.

A "softening point of resin" is a temperature at which a sphere drops when the softening point specified in JIS K 6220-1:2015 7.7 is measured with a ring and ball softening point measuring device.

An embodiment will be described below in further detail. However, the following descriptions are illustrative for explaining the present invention, and the present invention is not limited to the content of these descriptions. Moreover, although the embodiment will be described by appropriately using the drawings, the drawings are merely illustrative.

<Tire>

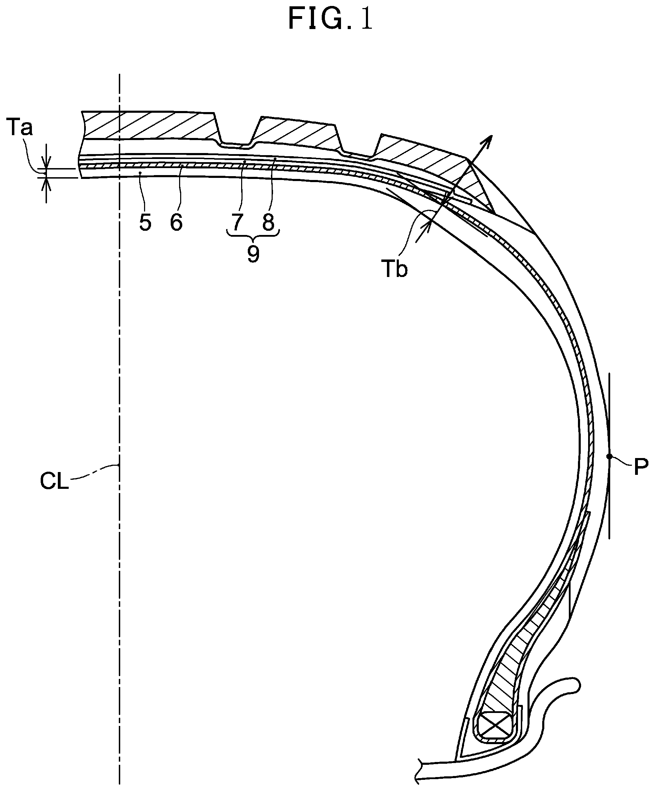

A tire in FIG. 1 comprises an inner liner 5, a carcass 6, a belt 7, and a band 8. The belt 7 and the band 8 constitute a reinforcing layer 9. The carcass 6 is composed of one carcass ply that comprises a plurality of carcass cords and a topping rubber covering the carcass cords. The belt 7 is composed of one belt ply that comprises a plurality of belt cords and a topping rubber covering the belt cords. The band 8 is composed of one band ply that comprises a plurality of band cords and a topping rubber covering the band cords. In the tire, the belt ply constituting the belt 7 is an inner-side reinforcing layer ply. A distance, in mm, from a tire inner surface to a surface of a carcass cord on a tire center line is denoted by Ta, and a distance, in mm, from a tire inner surface to a surface of a carcass cord on a normal line of the tire inner surface which passes through a tire width direction end of the inner-side reinforcing layer ply is denoted by Tb. A tire maximum width position is denoted by P.

In the tire in FIG. 1, although the carcass 6 may be composed of a plurality of carcass plies, the carcass 6 is composed of preferably a smaller number of carcass plies, more preferably one carcass ply, from the viewpoint of a reduction of a tire weight. Although the belt 7 may be composed of a plurality of belt plies, the belt 7 is composed of preferably a smaller number of belt plies, more preferably one belt ply, from the viewpoint of a reduction of a tire weight. Although the band 8 may be composed of a plurality of band plies, the band 8 is composed of preferably a smaller number of band plies, more preferably one band ply, from the viewpoint of a reduction of a tire weight. Although the reinforcing layer 9 may be composed of a plurality of reinforcing layer plies, the reinforcing layer 9 is composed of preferably a smaller number of reinforcing layer plies, preferably one reinforcing layer ply, from the viewpoint of a reduction of a tire weight.

In the tire of the present embodiment, the reinforcing layer may comprise both a belt and a band or may consist of a belt or a band. Among them, the reinforcing layer preferably consists of a belt.

FIG. 2 shows a developed view of carcass cords constituting a carcass ply, which shows an angle formed between an extending direction of carcass cord and the tire circumferential direction. In FIG. 2, W for the horizontal direction indicates a tire width direction, C for the vertical direction indicates a tire circumferential direction, and the direction perpendicular to the paper surface indicates a tire radial direction. FIG. 2 shows an aspect viewed from the inner-surface side of the tire. The carcass ply comprises a plurality of carcass cords and a topping rubber covering the carcass cords, and the carcass cords are shown by the solid lines in FIG. 2. An angle at which an extending direction of carcass cord inclines from the tire circumferential direction in FIG. 2 is $A_2$ at one of tire maximum width positions P, becomes $A_1$ at a position on a tire center line after bending, and then becomes $A_2$ at the other of tire maximum width positions P after further bending in the opposite direction. Besides, indicated by the two-dot chain line is an inner-side reinforcing layer ply that comprises a plurality of reinforcing layer cords and a topping rubber covering the reinforcing layer cords, specifically a belt ply.

The angle, in degrees, at which the extending direction of carcass cord inclines from the tire circumferential direction at the position on the tire center line is denoted by $A_1$, and the angle, in degrees, at which the extending direction of carcass cord inclines from the tire circumferential direction at the tire maximum width positions is denoted by $A_2$. Since the extending direction of carcass cord inclines downward to the right with respect to the tire circumferential direction when viewed form the inner-surface side of the tire, both of $A_1$ and $A_2$ have plus (+) values. On the other hand, an angle, in degrees, at which an extending direction of reinforcing layer cord inclines from the tire circumferential direction is denoted by $A_{RF}$. Since the extending direction of reinforcing layer cord inclines upward to the right with respect to the tire circumferential direction when viewed form the inner-surface side of the tire, $A_{RF}$ has a minus (-) value.

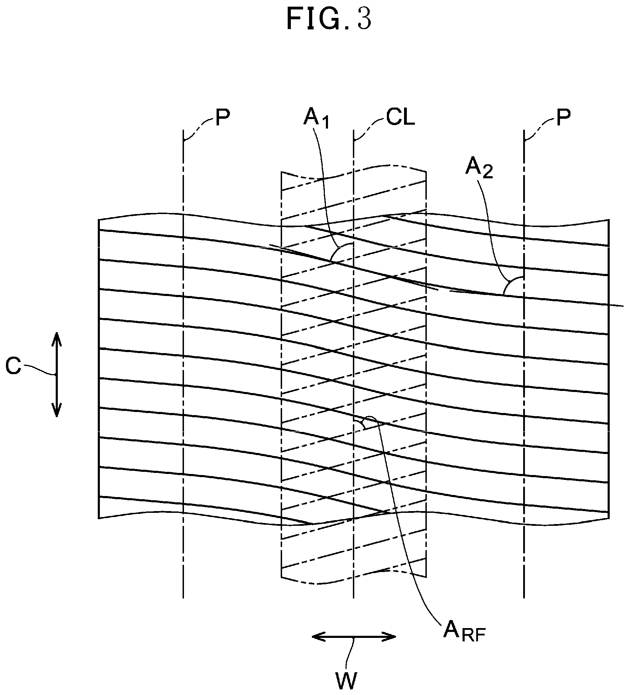

FIG. 3 is a developed view of carcass cords constituting a carcass ply, which represents an angle formed between an extending direction of carcass cord and the tire circumferential direction, and FIG. 3 is a variation of FIG. 2. FIG. 3 also shows an aspect viewed from the inner-surface side of the tire. An angle at which an extending direction of carcass cord inclines from the tire circumferential direction in FIG. 3 is $A_2$ at one of the tire maximum width positions P, becomes $A_1$ at the position on the tire center line after smooth changes of extending direction of the carcass cord, and then becomes $A_2$ at the other of the tire maximum width positions P after further smoothly changes of extending direction of the carcass cord in the opposite direction. In FIG. 3, an angle, in degrees, at which a tangent line of carcass cord inclines from the tire circumferential direction at the position on the tire center line CL is denoted by $A_1$, and an angle, in degrees, at which a tangent line of carcass cord inclines from the tire circumferential direction at the tire maximum width positions P is denoted by $A_2$. The other configurations are the same as in the case of FIG. 2.

In the tire of the present embodiment, a width of an R1 region in which an inclination angle of the carcass cord that is $A_1$ on the tire center line is within a predetermined fluctuation range is preferably 30% or more of a tread ground-contacting width. The width of the R1 region is more preferably 50% or more, further preferably 70% or more, further preferably 90% or more, of the tread ground-contacting width. On the other hand, the width of the R1 region is preferably 100% or less of the tread ground-contacting width.

Materials of the carcass cord and the reinforcing layer cord are not particularly limited, examples of which include, for example, a metal cord (a steel cord and the like), an organic fiber cord, an inorganic fiber cord (excluding metal cords), and the like.

The metal cord may be a single monofilament cord (that is, a cord having a $1 \times 1$ structure and consisting of one filament) or may have a plurality of filaments. In a case where one metal cord has a plurality of filaments, the metal cord preferably has a twist structure in which these filaments are twisted together along their longitudinal direction. The twist structure is not particularly limited, and can be, for example, a single-twist metal cord having a $1 \times N$ structure or a layer-twist metal cord having an M+N structure.

A filament constituting the organic fiber cord is not particularly limited, examples of which include, for example, a polyester fiber, a nylon fiber, an aramid fiber, a polyketone fiber, a polyparaphenylene acrylate fiber, a polyacrylate fiber, a rayon fiber, a cellulose fiber, a carbon fiber, and the like. Among them, a polyester fiber is preferable. These organic fibers may be formed of a synthetic fiber, a biomass-derived fiber, a recycled/regenerated fiber, or the like. These organic fibers may be used alone, or two or more thereof may be used in combination. Besides, the organic fiber cord can be one formed by twisting together a plurality of yarns obtained by twisting a plurality of filaments together.

Examples of the inorganic fiber cord other than metal cords include a carbon fiber cord, a glass fiber cord, and the like.

(Inequality (1))

In the present embodiment, a value on the right side in the inequality (1) is a value higher than 0. That is, $|A_2 - A_1| > 0$ is satisfied since $A_1$ and $A_2$ are at least different from each other in the tire of the present embodiment. In the present embodiment, a value of $|A_2 - A_1|$ is not particularly limited as long as it is higher than 0, but the value is usually lower than $60°$ or may be lower than $50°$, lower than $40°$, lower than $30°$, lower than $20°$, lower than $15°$, or $10°$ or lower. On the other hand, the value is preferably higher than $1°$, more preferably higher than $3°$, further preferably $5°$ or higher.

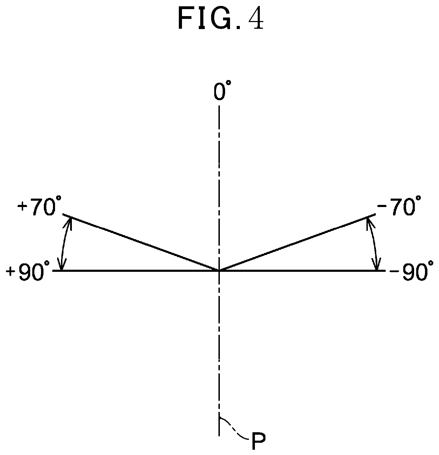

Moreover, $A_2$ is preferably $+70°$ or higher and $+90°$ or lower or $-70°$ or lower and higher than $-90°$. FIG. 4 shows, as a schematic view of a carcass cord constituting a carcass ply which is represented from the inner-surface side of the tire, a preferred range of angle formed between an extending direction of carcass cord and the tire circumferential direction. The phrase "$A_2$ is $+70°$ or higher and $+90°$ or lower or $-70°$ or lower and higher than $-90°$" means that the extending direction of the carcass cord is within a range of the arched double arrow in FIG. 4. When the range of $A_2$ is as described above, the effects of the present invention can be improved. For $A_2$ that is $+70°$ or higher and $+90°$ or lower, its lower limit is more preferably $+75°$ or higher, further preferably $+80°$ or higher, whereas its upper limit is more preferably $+85°$ or lower. For $A_2$ that is $-70°$ or lower and higher than $-90°$, its upper limit is more preferably $-75°$ or lower, further preferably $-80°$ or lower, whereas its lower limit is more preferably $-85°$ or higher.

(Inequality (2))

A value on the right side in the inequality (2) is preferably 0.60, more preferably 0.70, further preferably 0.79, further preferably 0.90, further preferably 0.99, further preferably 1.00, from the viewpoint of the effects of the present invention. On the other hand, an upper limit of a value on the left side in the inequality (2) is, but not particularly limited to, usually 2.00 or less, preferably 1.50 or less, more preferably 1.30 or less, further preferably 1.10 or less, from the viewpoint of a tire balance.

A distance Ta, in mm, from a tire inner surface to a surface of a carcass cord on the tire center line varies depending on tire size, but is, as one example, preferably greater than 0.7 mm, more preferably greater than 0.8 mm, further preferably greater than 0.9mm. On the other hand, Ta is preferably less than 2.4 mm, more preferably less than 2.2 mm, further preferably less than 2.0 mm, further preferably less than 1.5 mm, further preferably less than 1.2 mm. A distance Tb, in mm, from a tire inner surface to a surface of a carcass cord on a normal line of the tire inner surface passing through a tire width direction end of an inner-side reinforcing layer ply varies depending on tire size, but is, as one example, preferably greater than 0.7 mm, more preferably greater than 0.8 mm, further preferably greater than 0.9 mm. On the other hand, Tb is preferably less than 2.4 mm, more preferably less than 2.2 mm, further preferably less than 2.0 mm, further preferably less than 1.5 mm, further preferably less than 1.2 mm.

(Inequality (3))

In the inequality (3), a value of K is preferably 6.8, more preferably 7.1, further preferably 7.4, further preferably 8.0, further preferably 8.3, further preferably 10.0, further preferably 12.0. On the other hand, an upper limit of the value of K is, but not particularly limited to, usually about 100.0 or is about 50.0 or about 25.0.

(70°CE*i)

Although a value of a complex elastic modulus at 70°C, 70°CE*i, of a rubber composition constituting the inner liner is not particularly limited, the value is preferably greater than 2.0, more preferably greater than 2.3, further preferably greater than 2.5, further preferably greater than 2.9. On the other hand, the value is preferably less than 15.0, more preferably less than 13.0, further preferably less than 10.0.

70°CE*i can be appropriately adjusted depending on types or compounding amounts of a rubber component, a filler, a plasticizing agent, and the like which will be described below. For example, 70°CE*i can be increased by increasing a content of the filler in the rubber composition, and conversely, can be decreased by decreasing the content of the filler.

(ARF)

In at least any of the reinforcing layer plies, $A_{RF}$ that is an angle at which the extending direction of reinforcing layer cord inclines from the tire circumferential direction is preferably different from $A_1$, and particularly, the inclination direction of $A_{RF}$ from the tire circumferential direction is preferably opposite to the inclination direction of $A_1$ from the tire circumferential direction. This is because twist of the carcass ply that is arranged in a biased manner on the inner side of the tread part in the radial direction can be canceled.

A reinforcing layer comprising a reinforcing layer ply in which the angle, in degrees, at which the extending direction of reinforcing layer cord inclines from the tire circumferential direction is $A_{RF}$ is preferably composed of one reinforcing layer ply or is preferably composed of a belt ply.

<Rubber composition constituting inner liner>

A rubber composition constituting an inner liner will be described.

(Rubber component)

A rubber component preferably comprises a butyl-based rubber.

<<Butyl-based rubber>>

The butyl-based rubbers are preferably a polymer having an isobutylene unit and an isoprene unit as repeating units and a derivative thereof, and examples of such butyl-based rubbers include a butyl rubber (IIR); a halogenated butyl rubber such as a brominated butyl rubber (Br-IIR), chlorinated butyl rubber (Cl-IIR) and the like; and the like. Among them, a halogenated butyl rubber is preferable and a brominated butyl rubber and a chlorinated butyl rubber are more preferable, from the viewpoint that sheet processability and air barrier property can be improved with good balance. The butyl-based rubbers may be used alone, or two or more thereof may be used in combination.

As the butyl-based rubbers, in addition to a usual butyl-based rubber (a butyl-based rubber other than recycled butyl-based rubbers), a recycled butyl-based rubber can be used in combination. For a recycled butyl-based rubber, since a content rate of a non-halogenated butyl rubber (regular butyl rubber) is usually high, a good air barrier property and a good vulcanization rate can be secured by using the recycled butyl-based rubber in combination with a halogenated butyl rubber. The recycled butyl-based rubbers may be used alone, or two or more thereof may be used in combination.

As a butyl-based rubber, for example, products from Exxon Mobil Corporation, ENEOS Materials Corporation, ARLANXEO, JSR Corporation, Japan Butyl Co., Ltd., etc. can be used.

A content of a butyl-based rubber in 100% by mass of the rubber component is preferably greater than 70% by mass, more preferably greater than 75% by mass, further preferably greater than 80% by mass, further preferably 85% by mass or more, further preferably greater than 90% by mass, from the viewpoint of a sufficient air barrier property. The content of the butyl-based rubber may be 100% by mass. On the other hand, the content is preferably less than 100% by mass, more preferably less than 95% by mass, further preferably less than 90% by mass, further preferably 85% by mass or less, from the viewpoint of compatibility of a sufficient air barrier property with moldability.

<<Other rubber components>>

Examples of rubber components other than butyl-based rubbers include, for example, a diene-based rubber, such as an isoprene-based rubber (IR-based rubber), a butadiene rubber (BR), a styrene- butadiene rubber (SBR), a styrene-isoprene-butadiene rubber (SIBR), a chloroprene rubber (CR), an acrylonitrile-butadiene rubber (NBR), a polynorbornene rubber, and the like; and a non-diene-based rubber, such as a hydrogenated nitrile rubber (HNBR), an ethylene propylene rubber, a silicone rubber, a polyethylene chloride rubber, a fluororubber (FKM), an acrylic rubber (ACM), a hydrin rubber, and the like. Among them, the diene-based rubbers are preferable, and the isoprene-based rubber among them is preferable from the viewpoints of the improvements of stickiness and adhesiveness to an adjacent tire member, and the like. The other rubber components may be used alone, or two or more thereof may be used in combination.

Examples of the above-described isoprene-based rubber include an isoprene rubber (IR), a natural rubber (NR), a modified natural rubber, and the like, and among them, an NR is preferable. Examples of the modified natural rubber include an epoxidized natural rubber (ENR), a hydrogenated natural rubber (HNR), a grafted natural rubber, and the like. Moreover, as an NR, for example, those common in the tire industry can be used, such as SIR20, RSS#3, TSR20, and the like.

A content of another rubber component when compounded in 100% by mass of the rubber component is preferably greater than 5% by mass, more preferably greater than 10% by mass, further preferably 15% by mass or more, from the viewpoint of moldability. On the other hand, the content is preferably less than 30% by mass, more preferably 20% by mass or less, further preferably less than 10% by mass, from the viewpoint of air permeation resistance.

<<Rubber component synthesized from recycle-derived/biomass-derived raw material>>

A monomer that is a structural unit of a synthetic rubber such as an IR, an SBR, a BR, and the like may be one derived from underground resources such as petroleum, a natural gas, and the like or one recycled from a rubber product such as a tire and the like or a non-rubber product such as polystyrene and the like. Examples of monomers obtained by recycle (recycled monomers) include, but not particularly limited to, a recycle-derived polyisoprene, a recycle-derived butadiene, a recycle-derived aromatic vinyl compound, and the like. Examples of the above-described butadiene include 1,2-butadiene and 1,3 butadiene. Examples of the aromatic vinyl compound include, but not particularly limited to, styrene and the like. Among them, a recycle-derived polyisoprene (recycled isoprene), a recycle-derived butadiene (recycled butadiene), and/or a recycle-derived styrene (recycled styrene) are preferably used as raw materials.

A method of producing a recycled monomer is not particularly limited, examples of which include, for example, synthesis of a recycled monomer from recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be one derived from biomass. In the present specification, "biomass" refers to a material derived from natural resources such as plants and the like. Examples of biomass include, but not particularly limited to, for example, agricultural, forest and fishery products and sugar, wood waste, a plant residue after acquisition of a useful component, a plant-derived ethanol, a biomass naphtha, and the like.

Examples of the biomass-derived monomer (biomass monomer) include, but not particularly limited to, a biomass-derived butadiene, a biomass-derived aromatic vinyl compound, and the like. Examples of the above-described butadiene include 1, 2-butadiene and 1,3-butadiene. Examples of the above-described aromatic vinyl compound include, but not particularly limited to, styrene and the like. Moreover, a method of producing a biomass monomer is not particularly limited, examples of which include, for example, a method by biological and/or chemical and/or physical conversion of an animal or a plant, and the like. A microbial fermentation is representative of biological conversion, and examples of chemical and/or physical conversion include a method using a catalyst, a method using a high heat, a method using a high pressure, a method using an electromagnetic wave, a method using a critical liquid, combinations thereof, and the like.

Examples of a polymer synthesized from a biomass monomer component (biomass polymer) include, but not particularly limited to, a polybutadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether or not a raw material of a polymer is derived from biomass can be determined from percent Modern Carbon (pMC) measured according to ASTM D6866-10. "pMC" means a ratio of $^{14}C$ concentration of a sample to $^{14}C$ concentration of a modern standard carbon (modern standard reference) and is a value used as an index that indicates a biomass ratio of a compound. A significance of this value will be mentioned below.

In 1 mole of carbon atoms ($6.02 \times 10^{23}$), there are about $6.02 \times 10^{11}$ $^{14}C$ that are about one trillionth of the number of normal carbon atoms. A half-life of $^{14}C$ is 5730 years, and $^{14}C$ regularly decreases. Therefore, in fossil fuels such as coal, petroleum, natural gas, and the like, where it is considered that 226,000 years or more have passed since carbon dioxide in the atmosphere was absorbed by plants to be fixed, all of $^{14}C$ elements, which were contained in them at the beginning of fixation, have decayed. Therefore, in the present 21st century, fossil fuels such as coal, petroleum, natural gas, and the like do not contain any $^{14}C$ element. Accordingly, chemical substances produced using these fossil fuels as raw materials do not contain any $^{14}C$ element as well.

On the other hand, $^{14}C$ is constantly generated by cosmic rays causing nuclear reactions in the atmosphere. Therefore, decrease in $^{14}C$ due to radioactive decay and generation of $^{14}C$ due to nuclear reactions are balanced, and the amount of $^{14}C$ has been constant in the atmosphere environment of the earth. Therefore, the $^{14}C$ concentration of substances derived from biomass resources that have been circulating in the current environment becomes a value of about $1\times10^{-12}$ mol% based on the entire carbon atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference that becomes a reference for the $^{14}C$ concentration. As a specific reference material, an oxalic acid standard provided by NIST (National Institute of Standard and Technology) is used. A specific radioactivity of carbon in this oxalic acid (radioactivity intensity of $^{14}C$ per gram of carbon) is sorted for each carbon isotope, $^{13}C$ is corrected to be a constant value, and a value corrected for attenuation correction from 1950 to the date of measurement is used as a standard $^{14}C$ concentration value (100%). A ratio of this value and a value actually measured for a sample becomes a pMC value.

Thus, if a rubber is produced from a material derived from 100% biomass, the $^{14}C$ concentration shows a value of approximately 110 pMC as, currently, under a normal condition, it is often not equal to 100, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, that is, a material such as a rubber having a high biomass ratio, for a rubber composition.

(Filler)

A filler comprises carbon black. The carbon black may comprise a recovered carbon black (rCB). Moreover, the filler may comprise a filler other than carbon black, and examples of such a filler include not only silica but also those conventionally and commonly used in the tire industry, such as aluminum hydroxide, calcium carbonate, alumina, clay, talc, and the like. The filler may be one comprising carbon black and silica, one consisting of carbon black and silica, or one consisting of carbon black.

<<Carbon black>>

Examples of carbon black include, but not particularly limited to, N134, N110, N220, N234, N219, N339, N330, N326, N351, N550, N762, and the like. A raw material of carbon black may be a biomass material such as lignin, vegetable oil, and the like, from the viewpoints of a life cycle assessment, etc. Moreover, a method of producing carbon black may be a method using combustion such as a furnace method, may be a method using hydrothermal carbonization (HTC), or may be a method using pyrolysis of methane by a thermal black method and the like. As a commercially available product, products from ASAHI CARBON CO., LTD., Cabot Japan K.K., TOKAI CARBON CO., LTD., Mitsubishi Chemical Corporation., Lion Corporation., NIPPON STEEL Chemical & Material Co., Ltd., Columbia Carbon Corporation., etc. can be used. The carbon black may be used alone, or two or more thereof may be used in combination.

A nitrogen adsorption specific surface area ($N_2SA$) of carbon black is preferably less than 50 $m^2/g$, more preferably less than 45 $m^2/g$, further preferably less than 40 $m^2/g$, from the viewpoints of air permeation resistance and durability. Carbon black having a small $N_2SA$ is one generally referred to as a large-particle size carbon black. A lower limit of the $N_2SA$ of carbon black is not particularly limited, but is, for example, greater than 20 $m^2/g$. For the $N_2SA$ of carbon black, for example, an $N_2SA$ of Show Black N762 manufactured by Cabot Japan K.K. is 29 $m^2/g$, an $N_2SA$ of Statex N660 manufactured by Jiangix Black Cat Carbon Black Co., Ltd. is 35 $m^2/g$, an $N_2SA$ of Show Black N660 manufactured by Cabot Japan K.K. is 35 $m^2/g$, etc. Besides, the $N_2SA$ of the carbon black is measured by the above-described method.

A content of carbon black is preferably greater than 20 parts by mass, more preferably greater than 25 parts by mass, further preferably greater than 30 parts by mass, further preferably greater than 35 parts by mass, based on 100 parts by mass of the rubber component, from the viewpoints of reinforcing property and crack growth resistance. Moreover, the content of carbon black is preferably less than 100 parts by mass, more preferably less than 90 parts by mass, further preferably less than 80 parts by mass, further preferably less than 75 parts by mass, from the viewpoint of a reinforcing effect.

<<Recovered carbon black>>

In the present specification, the term "recovered carbon black" refers to carbon black obtained by pulverizing a product such as a used tire comprising carbon black and the like and baking the pulverized product, in which, after the product is subjected to oxidative combustion by heating in the air, a ratio of a mass of ash (ash content), which is a component that does not combust, is 13% by mass or more according to a thermal weight measurement method of JIS K 6226-2:2003. That is, a ratio of a mass (carbon amount) of a weight lost content due to the oxidative combustion of the recovered carbon black is 87% by mass or less. The recovered carbon black may be expressed by rCB.

A recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). As described in [0004] of JP 6856781 B, such carbon black obtained by the pyrolysis process usually lacks a functional group on its surface (A Comparison of Surface Morphology and Chemistry of Pyrolytic Carbon Blacks with Commercial Carbon Blacks, Powder Technology 160 (2005) 190-193). Therefore, since a surface reactivity of a recovered carbon black is low, it is considered that it is in a state where its physical bonding force is lowered in the rubber composition.

The recovered carbon black may be one that lacks a functional group on its surface or may be one treated so as to include a functional group on its surface. The treatment of the recovered carbon black so that the recovered carbon black includes a functional group on its surface can be performed by a usual method. For example, in EP 3173251 A, carbon black obtained from a pyrolysis process is treated with potassium permanganate under an acidic condition, thereby obtaining carbon black including a hydroxyl group and/or a carboxyl group on its surface. Moreover, in JP 6856781 B, carbon black obtained from a pyrolysis process is treated with an amino acid compound including at least one thiol group or disulfide group, thereby obtaining carbon black whose surface is activated. Examples of the recovered carbon black relating to the present embodiment also include carbon black treated so as to include a functional group on its surface. The recovered carbon black may be used alone, or two or more thereof may be used in combination.

<Silica>

Silica is not particularly limited, and those common in the tire industry can be used, such as, for example, silica prepared by a dry process (anhydrous silica), silica prepared by a wet process (hydrous silica), and the like. A raw material of silica is not particularly limited and may be, for example, a raw material derived from a mineral such as quartz or a raw material derived from a biological substance such as rice husks (for example, silica made from a biomass material such as rice husks, and the like), or silica recycled from a product containing silica may be used. Among them, hydrous silica prepared by a wet process is preferable for the reason that it has many silanol groups. The silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as a conventional wet silica, and filtering, washing with water, drying and pulverizing precipitates of the silicon dioxide.

As silica recycled from a product comprising silica, silica recovered from such a product as an electronic component like a semiconductor, a tire, a desiccant, a filtering material like diatomaceous earth, or the like can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (see JP 2009-2594 A, Akita Prefectural University Web Journal B/2019, vol.6, p.216-222, etc.).

As an amorphous silica extracted from rice husks, those commercially available from Wilmar, etc. can be used.

A nitrogen adsorption specific surface area ($N_2SA$) of silica is preferably greater than 50 $m^2$/g, more preferably greater than 100 $m^2$/g, further preferably greater than 150 $m^2$/g, further preferably greater than 170 $m^2$/g. Moreover, an upper limit of the $N_2SA$ of silica is, but not particularly limited to, preferably less than 350 $m^2$/g, more preferably less than 250 $m^2$/g, further preferably less than 200 $m^2$/g. When it is within the above-described ranges, cut resistance tends to be improved. Besides, the $N_2SA$ of the silica is a value measured by the above-described method.

A content of silica when compounded based on 100 parts by mass of the rubber component is, but not particularly limited to, preferably greater than 1 part by mass, preferably greater than 5 parts by mass, more preferably greater than 10 parts by mass, further preferably greater than 20 parts by mass, from the viewpoints of fuel efficiency and securement of ride comfort. Moreover, the content is preferably less than 150 parts by mass, more preferably less than 100 parts by mass, further preferably less than 50 parts by mass, further preferably less than 30 parts by mass, from the viewpoints of dispersibility of silica and processability.

<<Silane coupling agent>>

In a case where silica is used, a rubber composition preferably further comprises a silane coupling agent. Examples of the silane coupling agent include, but not particularly limited to, for example, sulfide-based ones such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N, N-dimethylthiocarbamoyl tetrasulfide, 2-triethoxysilylethyl-N, N-dimethylthiocarbamoyl tetrasulfide, 3-triethoxysilylpropyl methacrylate monosulfide, and the like; mercapto-based ones such as 3-mercaptopropyltrimethoxysilane, 2-mercaptoethyltriethoxysilane, NXT and NXT-Z100 manufactured by Momentive Performance Materials, and the like; vinyl-based ones such as vinyltriethoxysilane, vinyltrimethoxysilane, and the like; amino-based ones such as 3-aminopropyltriethoxysilane, 3-aminopropyltrimethoxysilane, and the like; glycidoxy-based ones such as γ-glycidoxypropyltriethoxysilane, γ-glycidoxypropyltrimethoxysilane, and the like; nitro-based ones such as 3-nitropropyltrimethoxysilane, 3-nitropropyltriethoxysilane, and the like; and chloro-based ones such as 3-chloropropyltrimethoxysilane, 3-chloropropyltriethoxysilane, and the like. As a commercially available product, products from Evonik Industries AG, Momentive Performance Materials, Shin-Etsu Chemical Co., Ltd., Tokyo Chemical Industry Co, Ltd., AZmax.co, Dow Corning Toray Co., Ltd., etc. can be used. The silane coupling agents may be used alone, or two or more thereof may be used in combination.

A content of a silane coupling agent when compounded based on 100 parts by mass of silica is preferably greater than 1 part by mass, more preferably greater than 3 parts by mass, further preferably greater than 5 parts by mass, further preferably greater than 7 parts by mass. On the other hand, the content is preferably less than 20 parts by mass, more preferably less than 18 parts by mass, further preferably less than 16 parts by mass, further preferably less than 14 parts by mass. When the content is within the above-described ranges, dispersibility of the silica tends to be improved.

(Other compounding agents)

Compounding agents conventionally and commonly used in the tire industry, such as, for example, a plasticizing agent, a compatibilizer, processing aid, a vulcanized rubber particle, wax, stearic acid, an antioxidant, zinc oxide, a vulcanizing agent, a vulcanization accelerator, and the like, can appropriately be compounded in the rubber composition, in addition to the rubber component and the filler.

<<Plasticizing agent>>

A plasticizing agent is a material giving a rubber component plasticity and includes both a plasticizing agent that is in a liquid state at 25°C and a plasticizing agent that is solid at 25°C. Examples of the plasticizing agent include resin, oil, a liquid polymer, an ester-based plasticizing agent, and the like. These plasticizing agents may be ones derived from mineral resources such as petroleum, natural gas, and the like, ones derived from biomass, or ones derived from naphtha recycled from a rubber product or non-rubber product. Moreover, low-molecular-weight hydrocarbon components obtained by pyrolyzing used tires or products containing various components and performing extraction from the pyrolysate may be used as plasticizing agents. The plasticizing agents may be used alone, or two or more thereof may be used in combination.

• Resin

For the rubber composition relating to the present embodiment, resin may be used in combination. Resin that can be used for the present embodiment is not particularly limited, and any resin commonly used in the tire industry can be used, examples of which include, for example, a C9-based resin, a C5-based resin, a C5/C9-based resin, a dicyclopentadiene-based resin, an aromatic vinyl-based resin, a coumarone-based resin, an indene-based resin, a terpene-based resin, a rosin-based resin, a phenol-based resin, and the like. These resins may be used alone, or two or more thereof may be used in combination. Each resin may also be used alone, or two or more thereof may be used in combination, respectively.

C9-based resin

A "C9-based resin" refers to a resin obtained by polymerizing C9 fractions, and may be a polymer obtained by polymerizing a C9 fraction alone or a copolymer obtained by copolymerizing a C9 fraction with other components. For example, a resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

C5-based resin

A "C5-based resin" refers to a resin obtained by polymerizing C5 fractions and may be one obtained by hydrogenating or modifying it. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

C5/C9-based resin

A "C5/C9-based resin" refers to a resin obtained by copolymerizing the C5 fraction and the C9 fraction and may be one obtained by hydrogenating or modifying it. As the C5/C9-based petroleum resin, for example, those commercially available from Tosoh Corporation, Zibo Luhua Hongjin New Material Group Co., Ltd, etc. can be used.

Dicyclopentadiene-based resin

A "dicyclopentadiene-based resin" refers to a resin comprising cyclopentadiene (CPD) and/or dicyclopentadiene (DCPD) as a monomer component having the largest content and may be one obtained by hydrogenating or modifying it. As the dicyclopentadiene-based resin, for example, a polymer obtained by polymerizing only dicyclopentadiene as a monomer, a copolymer obtained by copolymerizing dicyclopentadiene with the C9 fraction (DCPD/C9 resin), and the like are preferable. As the dicyclopentadiene-based resin, for example, those commercially available from Exxon Mobil Corporation, ENEOS Corporation, Zeon Corporation, Maruzen Petrochemical Co., Ltd., etc. can be used.

Aromatic vinyl-based resin

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying it. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

Coumarone-based resin

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

Indene-based resin

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

Terpene-based resin

A "terpene-based resin" refers to a resin comprising a terpene compound such as $\alpha$-pinene, $\beta$-pinene, limonene, dipentene, and the like as a monomer component, and may be one obtained by hydrogenating or modifying it. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

Rosin-based resin

A "rosin-based resin" refers to a resin comprising a rosin acid compound such as abietic acid, neoabietic acid, palustric acid, isopimaric acid, and the like, and may be one obtained by hydrogenating or modifying it. Example of the rosin-based resin include, but not particularly limited to, for example, a natural resin rosin, a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

Phenol-based resin

A "phenol-based resin" refers to a resin comprising a phenolic compound such as phenol, cresol, and the like as a monomer component, and may be one obtained by hydrogenating or modifying it. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

A softening point of resin is preferably 60°C or higher, more preferably 70°C or higher, further preferably 80°C or higher, from the viewpoints of processability, improvement in dispersibility of a filler in a rubber component, etc. On the other hand, it is preferably 150°C or lower, more preferably 140°C or lower, further preferably 130°C or lower. Besides, the softening point of resin is measured by the above-described measuring method.

A content of resin when compounded based on 100 parts by mass of the rubber component is preferably greater than 1 part by mass, more preferably greater than 1.5 parts by mass, further preferably greater than 2 parts by mass. On the other hand, the content is preferably less than 20 parts by mass, more preferably less than 10 parts by mass, further preferably less than 5 parts by mass.

• Oil

Examples of oil include, for example, mineral oils, vegetable oils, animal oils, and the like. Moreover, from the viewpoint of a life cycle assessment, one obtained by refining a waste oil after use for a rubber mixing machine or an engine or waste cooking oil used in a cooking facility may also be used. The oils may be used alone, or two or more thereof may be used in combination.

In the present specification, "mineral oil" refers to oil derived from mineral resources such as petroleum, natural gas, and the like. Examples of mineral oil include paraffinic oils (mineral oils), naphthenic oils, aromatic oils, and the like. Specific examples of the mineral oils include, for example, MES (Mild Extracted Solvate), DAE (Distillate Aromatic Extract), TDAE (Treated Distillate Aromatic Extract), TRAE (Treated Residual Aromatic Extract), RAE (Residual Aromatic Extract), and the like. Moreover, as an environmental measure, oils each having a low content of a polycyclic aromatic compound (PCA) can also be used. Examples of the oils each having a low content of a PCA include MES, TDAE, heavy naphthenic oil, and the like. The mineral oils may be used alone, or two or more thereof may be used in combination.

In the present specification, examples of the vegetable oils include, for example, a linseed oil, a rapeseed oil, a safflower oil, a soybean oil, a corn oil, a cottonseed oil, a rice bran oil, a tall oil, a sesame oil, perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oils also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oils, a waste cooking oil obtained by recovering what was utilized as an edible oil, etc., and the like. Besides, the vegetable oil may be liquid or solid at 25°C. The vegetable oils may be used alone, or two or more thereof may be used in combination.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a multimer that is a trimer or higher. Besides, acylglycerol that is a dimer or higher can be obtained by thermal polymerization, oxidative polymerization, or the like. Moreover, the acylglycerol may be liquid or solid at 25°C.

Whether the rubber composition comprises the above-described acylglycerol can be confirmed by, but not particularly limited to, $^1$H-NMR measurement. For example, a heavy chloroform in which a rubber composition containing triacylglycerol is immersed at 25°C for 24 hours and then removed is subjected to $^1$H-NMR measurement at room temperature, and signals near 5.26 ppm, near 4.28 ppm, and near 4.15 ppm are observed under a condition that a signal of tetramethylsilane (TMS) is set to 0.00 ppm. These signals are presumed to be derived from hydrogen atoms bonded to carbon atoms adjacent to oxygen atoms of the ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include monounsaturated fatty acids such as oleic acid and the like; and polyunsaturated fatty acids such as linoleic acid, linolenic acid, and the like. Moreover, examples of the saturated fatty acid include butyric acid, lauric acid, and the like.

Among them, as the above-described fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid or a vegetable oil refined by transesterification or the like may be used. Moreover, in order to produce a vegetable oil comprising such fatty acid, a plant may be improved by selective breeding, gene recombination, genome editing, or the like.

As a vegetable oil, for example, those commercially available from Idemitsu Kosan Co., Ltd., Sankyo Yuka Kogyo K. K., ENEOS Corporation, Olisoy, H&R Group, HOKOKU Corporation, Fuji Kosan Co., Ltd., The Nisshin Oillio Group, etc. can be used.

Examples of the animal oils include fish oils, beef tallow, oleyl alcohol derived therefrom, and the like.

A content of oil based on 100 parts by mass of the rubber component is preferably greater than 1 part by mass, more preferably greater than 2 parts by mass, further preferably 3 parts by mass or more. Moreover, the content is preferably less than 20 parts by mass, more preferably less than 15 parts by mass, further preferably 10 parts by mass or less. Besides, the content of oil shall also include an amount of oil contained as an extending oil in a rubber component or oil contained in another component such as sulfur and the like.

• Liquid polymer

A liquid polymer is a polymer in a liquid state at 25°C, examples of which include, for example, a liquid diene-based polymer, and the like. Examples of the liquid diene-based polymer include a liquid styrene-butadiene copolymer (liquid SBR), a liquid butadiene polymer (liquid BR), a liquid isoprene polymer (liquid IR), a liquid styrene-isoprene copolymer (liquid SIR), and the like. A number average molecular weight (Mn) of the liquid diene-based polymer, which is measured with a gel permeation chromatography (GPC) and calculated in terms of polystyrene, is preferably greater than 1000, more preferably greater than 3000. On the other hand, the Mn is preferably less than 100000, more preferably less than 15000. A Mn of the liquid polymer is a value measured with a gel permeation chromatography (GPC) and calculated in terms of polystyrene. As a liquid diene-based polymer, for example, products from Sartomer, Kuraray Co., Ltd., etc. can be used. The liquid polymer may be used alone, or two or more thereof may be used in combination.

• Ester-based plasticizing agent

Examples of the ester-based plasticizing agent include, for example, dibutyl adipate (DBA), diisobutyl adipate (DIBA), dioctyl adipate (DOA), di(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agents may be used alone, or two or more thereof may be used in combination.

<<Compatibilizer>>

A compatibilizer is used for the purpose of reducing a separation energy on an interface between a polymer and a filler or between different types of polymers and aiding in intermixing with each other. A compatibilizer is not particularly limited, and those conventionally used in the tire industry can be used as a compatibilizer. Specific examples of the compatibilizer include, for example, non-reactive compatibilizers such as an ethylene-propylene-styrene copolymer, a styrene-ethylene-butadiene block copolymer, a styrene-methyl methacrylate block copolymer, an ethylene-styrene graft copolymer, a chlorinated polyethylene, a mixture of an aromatic hydrocarbon-based resin and an aliphatic hydrocarbon-based resin, a metallic soap of an unsaturated fatty acid, and the like; and reactive compatibilizers such as a maleic anhydride graft polypropylene, a styrene-maleic anhydride copolymer, an ethylene-glycidyl methacrylate copolymer, a styrene graft copolymer to an ethylene-glycidyl methacrylate copolymer, and the like. Among them, an ethylene-propylene-styrene copolymer is preferable. The compatibilizers may be used alone, or two or more thereof may be used in combination.

Although a content of a compatibilizer is not particularly limited, the content is, for example, preferably greater than 3 parts by mass, more preferably greater than 4 parts by mass, further preferably greater than 5 parts by mass, based on 100 parts by mass of the rubber component, considering air barrier property. On the other hand, the content is preferably less than 15 parts by mass, more preferably less than 12 parts by mass, further preferably less than 10 parts by mass.

<<Processing aid>>

Examples of processing aid include, for example, a fatty acid metal salt, a fatty acid amide, an amide ester, a silica surfactant, a mixture of a fatty acid metal salt and an amide ester, a mixture of a fatty acid metal salt and a fatty acid amide, and the like. As processing aid, for example, those commercially available from Schill+Seilacher GmbH, Performance Additives, etc. can be used. The processing aid may be used alone, or two or more thereof may be used in combination.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

<<Vulcanized rubber particle>>

The vulcanized rubber particle is a particle made of a vulcanized rubber. Specifically, a rubber powder specified in JIS K 6316:2017, and the like can be used. A recycled rubber powder produced from a pulverized product of a waste tire and the like is preferable from the viewpoints of consideration for environment and cost. The vulcanized rubber particle is not particularly limited and may be a non-modified vulcanized rubber particle or a modified vulcanized rubber particle. As a commercially available product of a vulcanized rubber, for example, products manufactured by Lehigh Technologies, Muraoka Rubber Reclaiming Co., Ltd. etc. can be used. The vulcanized rubber particle may be used alone, or two or more thereof may be used in combination.

<<Wax>>

Wax is not particularly limited, and any of those commonly used in the tire industry can be appropriately used, examples of which include, for example, a mineral-based wax, a plant-derived wax, and the like. The mineral-based wax refers to a wax derived from mineral resources such as oil, natural gas, and the like. The plant-derived wax refers to a wax derived from natural resources such as plants. Among them, the mineral-based wax is preferable. Examples of the plant-derived wax include, for example, a rice bran wax, a carnauba wax, a candelilla wax, and the like. Examples of the mineral-based wax include, for example, a paraffin wax, a microcrystalline wax, a specially selected wax thereof, and the like, and the paraffin wax is preferable. Besides, the wax relating to the present embodiment shall not include stearic acid. As wax, for example, those commercially available from Ouchi Shinko Chemical Industry Co., Nippon Seiro Co., Ltd., PARAMELT, etc. can be used. The wax may be used alone, or two or more thereof may be used in combination.

A content of wax when compounded based on 100 parts by mass of the rubber component is preferably greater than 0.3 parts by mass, more preferably greater than 0.7 parts by mass, further preferably greater than 1.0 parts by mass. On the other hand, the content is preferably less than 4.0 parts by mass, more preferably less than 3.0 parts by mass, further preferably less than 2.5 parts by mass.

<<Stearic acid>>

A content of stearic acid when compounded based on 100 parts by mass of the rubber component is preferably greater than 0.5 parts by mass, more preferably greater than 0.7 parts by mass, further preferably 1.0 parts by mass or more, from the viewpoint of processability. On the other hand, the content is preferably less than 10 parts by mass, more preferably less than 7 parts by mass, further preferably less than 5 parts by mass, from the viewpoint of vulcanization rate.

<<Antioxidant>>

Examples of the antioxidant include, but not particularly limited to, a naphthylamine-based antioxidant such as phenyl-$\alpha$-naphthylamine and the like; a diphenylamine-based antioxidant such as octylated diphenylamine, 4,4'-bis($\alpha,\alpha$'-dimethylbenzyl)diphenylamine, and the like; a p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, styrenated phenol, and the like; bisphenol-based, trisphenol-based, or polyphenol-based antioxidants such as tetrakis-[methylene-3-(3',5'-di-t-butyl-4'-hydroxyphenyl) propionate]methane and the like; and the like. Among them, the p-phenylenediamine-based antioxidant and the quinoline-based antioxidant are preferable, and N-(1,3-dimethylbutyl)-N'-phenyl-p-phenylenediamine and a polymer of 2,2,4-trimethyl-1,2-dihydroquinoline are more preferable. As the commercially-available product, for example, products manufactured by Seiko Chemical Co., Ltd., Sumitomo Chemical Co., Ouchi Shinko Chemical Industry Co., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably 1.0 parts by mass or more. On the other hand, the content is preferably less than 7.0 parts by mass, more preferably less than 5.0 parts by mass, further preferably less than 3.0 parts by mass.

<<Zinc oxide>>

A content of zinc oxide when compounded based on 100 parts by mass of the rubber component is preferably greater than 0.5 parts by mass, more preferably greater than 0.7 parts by mass, further preferably 1 part by mass or more, from the viewpoint of processability. On the other hand, the content is preferably less than 10 parts by mass, more preferably less than 7 parts by mass, further preferably less than 5 parts by mass, from the viewpoint of abrasion resistance.

<<Vulcanizing agent>>

A vulcanizing agent is not particularly limited, and known vulcanizing agents can be used, examples of which include, for example, organic peroxide, a sulfur-based vulcanizing agent, a resin vulcanizing agent, metallic oxide such as magnesium oxide and the like, etc. Among them, the sulfur-based vulcanizing agent is preferable. As the sulfur-based vulcanizing agent, for example, sulfur donors such as sulfur, morpholine disulfide, and the like, etc. can be used. Among them, it is preferable that sulfur is used. The vulcanizing agent can be used alone, or two or more thereof can be used in combination.

Examples of sulfur include a powdery sulfur, a precipitated sulfur, a colloidal sulfur, a surface-treated sulfur (an oil processing sulfur, a special sulfur treated with a dispersing agent, a masterbatch-type sulfur, and the like), an insoluble sulfur (an oil processing insoluble sulfur and the like), and the like, and any of them can be appropriately used. Among them, the powdery sulfur is preferable. As sulfur, for example, those manufactured and sold by Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., and the like can be used.

A known organic crosslinking agent can also be used as a vulcanizing agent. Although the organic crosslinking agent is not particularly limited as long as it can form a crosslinking chain other than polysulfide bond, examples of the organic crosslinking agent include, for example, an alkylphenol-sulfur chloride condensate, sodium hexamethylene-1,6-bisthiosulfate dihydrate, 1,6-bis(N,N'-dibenzylthiocarbamoyldithio)hexane, dicumyl peroxide, and the like, and 1,6-bis(N,N'-dibenzylthiocarbamoyldithio)hexane is preferable. As these organic crosslinking agents, those commercially available from Taoka Chemical Co., Ltd., LANXESS, Flexsys etc. can be used.

A content of a vulcanizing agent when compounded based on 100 parts by mass of the rubber component is preferably greater than 0.3 parts by mass, more preferably greater than 0.4 parts by mass, further preferably greater than 0.45 parts by mass. On the other hand, the content is preferably less than 6.0 parts by mass, more preferably less than 3.0 parts by mass, further preferably less than 1.0 parts by mass. When the content of the vulcanizing agent is within the above-described ranges, an appropriate reinforcing effect tends to be obtained. Besides, in a case where the vulcanizing agent includes a component other than sulfur like an oil-processing sulfur and the like, the content of the vulcanizing agent means a content of a sulfur component itself.

<<Vulcanization accelerator>>

A vulcanization accelerator is not particularly limited, and known vulcanization accelerators can be used, examples of which include, for example, sulfenamide-based, thiazole-based, guanidine-based, thiuram-based, thiourea-based, dithiocarbamic acid-based, aldehyde-amine-based or aldehyde-ammonia-based, imidazoline-based, and xanthate-based vulcanization accelerators. Among them, the sulfenamide-based vulcanization accelerator, the thiazole-based vulcanization accelerator, the guanidine-based vulcanization accelerator, and the thiuram-based vulcanization accelerator are preferable, the sulfenamide-based vulcanization accelerator and the thiazole-based vulcanization accelerator are more preferable, and the thiazole-based vulcanization accelerator is further preferable. As the vulcanization accelerator, for example, those manufactured and sold by Ouchi Shinko Chemical Industry Co., Ltd., Sanshin Chemical Industry Co., Ltd., etc., and the like can be used. These vulcanization accelerators may be used alone, or two or more thereof may be used in combination.

Examples of the sulfenamide-based vulcanization accelerator include, for example, N-tert-butyl-2-benzothiazolyl sulfenamide (TBBS), N-cyclohexyl-2-benzothiazolyl sulfenamide (CBS), N,N'-dicyclohexyl-2-benzothiazolyl sulfenamide (DZ), and the like. Examples of the thiazole-based vulcanization accelerator include, for example, 2-mercaptobenzothiazole (MBT) or salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Examples of the guanidine-based vulcanization accelerator include, for example, 1,3-diphenylguanidine (DPG), diorthotrilguanidine, orthotrilbiguanidine, and the like. Examples of the thiuram-based vulcanization accelerator include, for example, tetramethylthiuram monosulfide, tetramethylthiuram disulfide, tetrabenzylthiuram disulfide (TBzTD), and the like.

A content of a vulcanization accelerator based on 100 parts by mass of the rubber component is preferably greater than 0.3 parts by mass, more preferably greater than 0.5 parts by mass, further preferably greater than 1.0 parts by mass. On the other hand, the content is preferably less than 4.0 parts by mass, more preferably less than 3.0 parts by mass, further preferably less than 2.0 parts by mass. When the content of the vulcanization accelerator is within the above-described ranges, breaking strength and elongation tend to be able to be secured.

In the present specification, various materials each comprising a carbon atom (for example, a rubber, oil, resin, a vulcanization accelerator, an antioxidant, a surfactant, and the like) may be derived from carbon dioxide in the atmosphere. As a method of obtaining compounds relating to the present embodiment from carbon dioxide, carbon dioxide may be directly converted, or methane obtained through a methanation step for synthesizing methane from carbon dioxide may be converted.

The rubber composition relating to the present embodiment can be produced by a known method. For example, it can be produced by kneading the respective above-described components with a rubber kneading machine such as an open roll, a sealed type kneader (a Banbury mixer, a kneader, and the like), and the like.

The kneading step includes, for example, a base kneading step of kneading compounding agents and additives other than a vulcanizing agent and vulcanization accelerators; and a final kneading (F-kneading) step of adding the vulcanizing agent and the vulcanization accelerators to the kneaded product obtained in the base kneading step and kneading them. Additionally, the base kneading step can also be divided into multiple steps as necessary. In a case where the base kneading step is divided, a method of dividing the base kneading step may be: (1) a method of previously kneading a part of compounding agents and additives into a masterbatch and then adding the remaining compounding agents and additives to the obtained masterbatch to knead them; (2) a method of kneading all of compounding agents and additives to be kneaded in the base kneading step at once, and then remilling the kneaded product one or more times; or the like. In the above-described method (1), the number of masterbatches is not limited and may be two or more. Moreover, when the number of masterbatches is two or more, all of compounding agents and additives used in the base kneading step may be allocated to any of the masterbatches.

Examples of kneading conditions include, but not particularly limited to, for example, a method of kneading at a discharge temperature of 150°C to 170°C for 3 to 10 minutes in the base kneading step and kneading at 70°C to 110°C for 1 to 5 minutes in the final kneading step.

A pneumatic tire relating to the present embodiment can be produced by a usual method using an unvulcanized rubber composition obtained by the above-described method. That is, first, an unvulcanized rubber composition is extruded into a shape of an inner liner to obtain an unvulcanized inner liner. The unvulcanized inner liner thus obtained is attached together with other tire members on a tire molding machine by a usual method to form an unvulcanized tire. At this time, a distance from a tire inner surface to a carcass cord and a structure of the carcass cord are configured to become predetermined ones. Moreover, as necessary, a reinforcing layer is configured to have a predetermined structure. The unvulcanized tire thus obtained is heated and pressurized in a vulcanizing machine, whereby the pneumatic tire relating to the present embodiment can be produced. Examples of vulcanization conditions include, but not particularly limited to, for example, a method of vulcanizing at 150°C to 200°C for 10 to 40 minutes.

<Applications>

The pneumatic tire relating to the present embodiment can be used for any application and can be used as a tire for a passenger car, a tire for a large passenger car, a tire for a large SUV, a racing tire, a motorcycle tire, a heavy-duty tire, or a run-flat tire. Besides, the "tire for a passenger car" refers to a tire that is presupposed to be mounted to a vehicle running with four wheels and that has a maximum load capacity of less than 1400 kg. Moreover, the "heavy-duty tire" refers to a tire having a maximum load capacity of 1400 kg or more. Moreover, in the present specification, the tire can be used as an all-season tire and a summer tire, as well a winter tire such as a studless tire and the like.

EXAMPLE

Hereinafter, examples considered to be preferable in implementing the present invention (Examples) will be described, though the scope of the present invention is not limited to these Examples. Results, which are calculated based on evaluation methods described below considering a tire having an inner liner and a tire structure, the tire being obtained in accordance with each Tables using various chemicals described below, are shown in the lower part of each Table.

<Various chemicals>

Various chemicals used in Examples and Comparative examples are collectively shown below.

IR-based rubber: TSR20 (natural rubber)
Butyl-based rubber 1: BB2222 (manufactured by Exxon Mobil Corporation, bromobutyl rubber)
Butyl-based rubber 2: Chlorobutyl HT1066 (manufactured by Exxon Mobil Corporation, chlorobutyl rubber)
Carbon black: Show Black N660 (manufactured by Cabot Japan K.K., $N_2SA$: 35 $m^2/g$)
Resin: MARUKAREZ T-100AS (manufactured by Maruzen Petrochemical Co., Ltd., C5-based resin (aliphatic hydrocarbon resin), softening point: 97 to 103°C)
Oil: Diana Process PS-32 (manufactured by Idemitsu Kosan Co., Ltd., mineral oil, paraffin component: 67% by mass, naphthene component: 28% by mass, aroma component: 5% by mass)
Compatibilizer: 40MS (manufactured by STRUKTOL, ternary copolymer consisting of ethylene, propylene, and styrene, SP value: 8.9, softening point: 101°C, Tg: 58°C)
Stearic acid: Bead stearic acid "CAMELLIA" (manufactured by NOF CORPORATION)
Antioxidant: Antigen 6C (manufactured by Sumitomo Chemical Co., Ltd., N-(1,3-dimethylbutyl)-N'-phenyl-p-phenylenediamine (6PPD))
Zinc oxide: Zinc oxide No. 2 (manufactured by Mitsui Mining & Smelting Co., Ltd.)
Sulfur: HK-200-5 (manufactured by Hosoi Chemical Industry Co., Ltd., powdery sulfur, oil content: 5% by mass)
Vulcanization accelerator 1: Nocceler M (manufactured by Ouchi Shinko Chemical Industry Co., Ltd., 2-mercaptobenzothiazole)
Vulcanization accelerator 2: Nocceler DM (manufactured by Ouchi Shinko Chemical Industry Co., Ltd., di-2-benzothiazolyldisulfide)

<Examples and Comparative examples>

According to compounding formulations shown in each Table, using a 1.7 L closed Banbury mixer, chemicals other than sulfur and vulcanization accelerators are kneaded for 5 minutes until a temperature reaches a discharge temperature at 160°C to obtain a kneaded product. Next, the sulfur and vulcanization accelerators are added to the obtained kneaded product, and the mixture is kneaded using a twin-screw open roll for 4 minutes until the temperature reaches 105°C to obtain an unvulcanized rubber composition for inner liner.
The obtained unvulcanized rubber composition is extruded into a shape of an inner liner with an extruder equipped with a mouthpiece having a predetermined shape, which is then attached together with other tire members while adjusting them to have a predetermined tire structure shown in each Table, to prepare an unvulcanized tire. The obtained unvulcanized tire is press-vulcanized under a condition at 150°C for 35 minutes, thereby producing each test tire (tire size: 195/65R15).

Tire structures in each Table are explained. In tires in Table 1, $A_1$ is +75° and $A_2$ is +85° for an inclination angle of carcass cord, and Ta is 1.0 mm and Tb is 0.8 mm for a thickness of an inner liner. Therefore, $|A_2 - A_1| = 10°$ for the inequality (1), and Tb / Ta = 0.80 for the inequality (2). Moreover, in tires in Table 2, $A_1$ is +75° and $A_2$ is +80° for an inclination angle of carcass cord, and Ta is 1.0 mm and Tb is 1.0 mm for a thickness of an inner liner. Therefore, $|A_2 - A_1| = 5°$ for the inequality (1), and Tb / Ta = 1. 00 for the inequality (2).

In each Table, a value of $|A_2 - A_1| \times$ (Tb - 0.5 Ta) $\times$ 70°CE*i is a value comparable to a constant K in the inequality (3). That is, when the value is greater than the constant K, the inequality (3) is satisfied, and conversely, when the value is equal to or less than the constant K, the inequality (3) is not satisfied.

<Durability>

Each test tire is mounted on a drum tester, a time and a speed until the tire is damaged after increasing the speed from 210 km/h stepwise by 10 km/h with a vertical load of 4.82 kN applied are measured. Results are indicated as indexes with the reference Comparative example being as 100. The results show that the larger the numerical value is, the longer the time until the tire is damaged becomes and the more excellent the durability is.

Table 1

|  | Example | | | Comparative example |
|---|---|---|---|---|
|  | 1-1 | 1-2 | 1-3 | 1-1 |
| Compounding amount (parts by mass) | | | | |
| IR-based rubber | 15 | - | - | - |
| Butyl-based rubber 1 | 85 | - | - | - |
| Butyl-based rubber 2 | - | 100 | 100 | 100 |
| Carbon black | 45 | 45 | 30 | 30 |
| Resin | 3 | 3 | 3 | 3 |
| Oil | 6 | 5 | 5 | 5 |
| Compatibilizer | 10 | 6 | 6 | 6 |
| Stearic acid | 1.5 | 1.0 | 1.0 | 0.5 |
| Antioxidant | 1.0 | - | - | - |
| Zinc oxide | 1.5 | 1.0 | 1.0 | 0.5 |
| Sulfur | 0.48 | 0.53 | 0.53 | 0.53 |
| Vulcanization accelerator 1 | 0.55 | - | - | - |
| Vulcanization accelerator 2 | 0.70 | 1.25 | 1.25 | 1.25 |
| 70°CE*i (MPa) | 3.5 | 2.8 | 2.4 | 2.0 |
| $|A_2 - A_1| \times$ (Tb - 0.5 Ta) $\times$70°CE*i (Inequality (3)) | 10.5 | 8.4 | 7.2 | 6.0 |
| Tire durability | 132 | 118 | 110 | 100 |

Table 2

|  | Example | | | Comparative example |
|---|---|---|---|---|
|  | 2-1 | 2-2 | 2-3 | 2-1 |
| Compounding amount (parts by mass) | | | | |
| IR-based rubber | 15 | 15 | - | - |
| Butyl-based rubber 1 | 85 | 85 | - | - |
| Butyl-based rubber 2 | - | - | 100 | 100 |
| Carbon black | 68 | 68 | 50 | 35 |
| Resin | 3 | 3 | 3 | 3 |
| Oil | 6 | 6 | 5 | 5 |

(continued)

| | Example | | | Comparative example |
|---|---|---|---|---|
| | 2-1 | 2-2 | 2-3 | 2-1 |
| Compounding amount (parts by mass) | | | | |
| Compatibilizer | 10 | 10 | 6 | 6 |
| Stearic acid | 3.0 | 1.5 | 1.0 | 1.0 |
| Antioxidant | 1.0 | 1.0 | - | - |
| Zinc oxide | 3.0 | 1.5 | 1.0 | 1.0 |
| Sulfur | 0.48 | 0.48 | 0.53 | 0.53 |
| Vulcanization accelerator 1 | 0.55 | 0.55 | - | - |
| Vulcanization accelerator 2 | 0.70 | 0.70 | 1.25 | 1.25 |
| 70°CE*i (MPa) | 7.0 | 5.0 | 3.0 | 2.5 |
| $|A_2 - A_1| \times$ (Tb - 0.5 Ta) $\times 70°CE*i$ (Inequality (3)) | 17.5 | 12.5 | 7.5 | 6.25 |
| Tire durability | 167 | 141 | 110 | 100 |

REFERENCE SIGNS LIST

CL. Tire center line
W. Tire width direction
C. Tire circumferential direction
$A_1$. Angle at which extending direction of carcass cord inclines from tire circumferential direction at position on tire center line
$A_2$. Angle at which extending direction of carcass cord inclines from tire circumferential direction at tire maximum width position P
Ta. Distance from tire inner surface to surface of carcass cord on tire center line
Tb. Distance from tire inner surface to surface of carcass cord on normal line of tire inner surface which passes through tire width direction end of inner-side reinforcing layer ply
P. Tire maximum width position
5. Inner liner
6. Carcass
7. Belt
8. Band
9. Reinforcing layer

**Claims**

1. A pneumatic tire comprising:

a carcass,
an inner liner arranged on the inner side of the carcass in a tire radial direction, and
at least one reinforcing layer arranged on the outer side of the carcass in the tire radial direction,
wherein the carcass is composed of at least one carcass ply that comprises a plurality of carcass cords and a topping rubber covering the carcass cords,
wherein the reinforcing layer is composed of at least one reinforcing layer ply that comprises a plurality of reinforcing layer cords and a topping rubber covering the reinforcing layer cords,
wherein, among the at least one reinforcing layer ply, a reinforcing layer ply arranged on the innermost side in the tire radial direction is defined as an inner-side reinforcing layer ply, and
wherein $A_1$, $A_2$, Ta, Tb, 70°CE*i, and K satisfy the following inequalities, preferably a value on the right side in the inequality (2) being 0.60, more preferably 0.70, further preferably 0.79, further preferably 0.90, further preferably 0.99, preferably a value of K in the inequality (3) being 6.8, more preferably 7.1,

24

$$(1)\ |A_2 - A_1| > 0$$

$$(2)\ Tb / Ta > 0.50$$

$$(3)\ 70°CE^*i > K / \{|A_2 - A_1| \times (Tb - 0.5 \times Ta)\}$$

(provided that K is 6.5)

where $A_1$ represents an angle, in degrees, at which an extending direction of carcass cord of a carcass ply on the outermost side in the tire radial direction among the carcass plies inclines from a tire circumferential direction at a position on a tire center line, $A_2$ represents an angle, in degrees, at which an extending direction of carcass cord of the carcass ply on the outermost side in the tire radial direction among the carcass ply inclines from the tire circumferential direction at a tire maximum width position, Ta represents a distance, in mm, from a tire inner surface to a surface of a carcass cord on the tire center line, Tb represents a distance, in mm, from a tire inner surface to a surface of a carcass cord on a normal line of the tire inner surface which passes through a tire width direction end of the inner-side reinforcing layer ply, $70°CE^*i$ represents a complex elastic modulus at 70°C, in MPa, of a rubber composition constituting the inner liner, and K represent a constant.

2. The pneumatic tire of claim 1, wherein K is 7.4, preferably 8.0, further preferably 8.3.

3. The pneumatic tire of claim 1, wherein K is 10.0, preferably 12.0.

4. The pneumatic tire of any one of claims 1 to 3, wherein the right side in the inequality (2) is 1.00.

5. The pneumatic tire of any one of claims 1 to 4, wherein the rubber composition constituting the inner liner comprises a rubber component and the rubber component comprises an isoprene-based rubber.

6. The pneumatic tire of any one of claims 1 to 5, wherein the rubber composition constituting the inner liner comprises resin.

7. The pneumatic tire of any one of claims 1 to 6, wherein $A_1$ is different from $A_{RF}$, where $A_{RF}$ represents an angle, in degrees, at which an extending direction of reinforcing layer cord inclines from the tire circumferential direction in at least any of the reinforcing layer plies.

8. The pneumatic tire of claim 7, wherein the inclination direction of $A_{RF}$ from the tire circumferential direction is opposite to the inclination direction of $A_1$ from the tire circumferential direction.

9. The pneumatic tire of claim 7 or 8, wherein the reinforcing layer comprising the reinforcing layer ply in which the angle, in degrees, at which the extending direction of reinforcing layer cord inclines from the tire circumferential direction is $A_{RF}$ is composed of one reinforcing layer ply.

10. The pneumatic tire of any one of claims 7 to 9, wherein the reinforcing layer ply in which the angle, in degrees, at which the extending direction of reinforcing layer cord inclines from the tire circumferential direction is $A_{RF}$ is a belt ply.

11. The pneumatic tire of any one of claims 1 to 10, wherein the at least one reinforcing layer consists of a belt.

12. The pneumatic tire of any one of claims 1 to 11, wherein the carcass is composed of one carcass ply.

13. The pneumatic tire of any one of claims 1 to 12, wherein $A_2$ is +70° or higher and +90° or lower, preferably +75° or higher and +85° or lower, more preferably +80° or higher and +85° or lower, or is -70° or lower and higher than -90°, preferably -75° or lower and -85° or higher, more preferably -80° or lower and -85° or higher.

# FIG. 1

# FIG. 2

# FIG.3

FIG. 4

Europäisches
Patentamt
European
Patent Office
Office européen
des brevets

# EUROPEAN SEARCH REPORT

**Application Number**

EP 25 18 5444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 212 357 A1 (CONTINENTAL REIFEN DEUTSCHLAND GMBH [DE]) 19 July 2023 (2023-07-19) * paragraph [0047]; claims; figures * | 1-13 | INV. B60C1/00 B60C9/07 B60C9/17 B60C9/28 |
| A | DE 10 2022 204148 A1 (CONTINENTAL REIFEN DEUTSCHLAND GMBH [DE]) 2 November 2023 (2023-11-02) * paragraphs [0004], [0010], [0014]; claims; figures * | 1-13 | B60C9/00 B60C13/00 B60C9/20 B60C9/09 B60C11/00 |
| A | US 11 772 427 B2 (SUMITOMO RUBBER IND [JP]) 3 October 2023 (2023-10-03) * claims; figures * | 1-13 | |
| A | CN 115 003 523 A (MICHELIN & CIE) 2 September 2022 (2022-09-02) * claims; figures * | 1-13 | |
| A | DE 975 379 C (CONTINENTAL GUMMI WERKE AG) 16 November 1961 (1961-11-16) * claims; figures * | 1-13 | TECHNICAL FIELDS SEARCHED (IPC) |
| A | JP H03 292202 A (SUMITOMO RUBBER IND) 24 December 1991 (1991-12-24) * claims; figures * | 1-13 | B60C |

The present search report has been drawn up for all claims

| Place of search | Date of completion of the search | Examiner |
|---|---|---|
| Munich | 27 November 2025 | Thanbichler, Peter |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 5444

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2025

| Patent document cited in search report | | Publication date | Patent family member(s) | | Publication date |
|---|---|---|---|---|---|
| EP 4212357 | A1 | 19-07-2023 | DE 102022200389 | A1 | 20-07-2023 |
| | | | EP 4212357 | A1 | 19-07-2023 |
| DE 102022204148 | A1 | 02-11-2023 | NONE | | |
| US 11772427 | B2 | 03-10-2023 | CN 114940036 | A | 26-08-2022 |
| | | | EP 4043241 | A1 | 17-08-2022 |
| | | | JP 7631865 | B2 | 19-02-2025 |
| | | | JP 2022124235 | A | 25-08-2022 |
| | | | US 2022258537 | A1 | 18-08-2022 |
| CN 115003523 | A | 02-09-2022 | BR 112022012880 | A2 | 06-09-2022 |
| | | | CN 115003523 | A | 02-09-2022 |
| | | | EP 4096938 | A1 | 07-12-2022 |
| | | | FR 3106528 | A1 | 30-07-2021 |
| | | | WO 2021152223 | A1 | 05-08-2021 |
| DE 975379 | C | 16-11-1961 | NONE | | |
| JP H03292202 | A | 24-12-1991 | NONE | | |

For more details about this annex : see Official Journal of the European Patent Office, No. 12/82

**EP 4 678 413 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023084469 A
- WO 2021123530 A
- EP 3427975 A

- JP 6856781 B
- EP 3173251 A
- JP 2009002594 A

**Non-patent literature cited in the description**

- *Rubber Chemistry and Technology*, 2012, vol. 85 (3), 408-449
- A Comparison of Surface Morphology and Chemistry of Pyrolytic Carbon Blacks with Commercial Carbon Blacks. *Powder Technology*, 2005, vol. 160, 190-193

- *Akita Prefectural University Web Journal B/2019*, vol. 6, 216-222